Europäisches Patentamt

European Patent Office

Office européen des brevets

(19)

(11) EP 1 184 556 A2

(12) **EUROPEAN PATENT APPLICATION**

(43) Date of publication:
06.03.2002 Bulletin 2002/10

(51) Int Cl.7: **F02D 41/14**, F01N 9/00, F01N 3/20

(21) Application number: 01120185.2

(22) Date of filing: 22.08.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 04.09.2000 JP 2000267141

(71) Applicant: **Nissan Motor Co., Ltd.**
**Yokohama-shi, Kanagawa (JP)**

(72) Inventors:
• **Shiino, Toshikazu**
**Chigasaki-shi, Kanagawa (JP)**
• **Tsuchida, Hirofumi**
**Yokosuka-shi, Kanagawa (JP)**
• **Fukuda, Takashi**
**Yokohama-shi, Kanagawa (JP)**
• **Tayama, Akira**
**Yokosuka-shi, Kanagawa (JP)**

(74) Representative:
**Grünecker, Kinkeldey, Stockmair & Schwanhäusser Anwaltssozietät**
**Maximilianstrasse 58**
**80538 München (DE)**

(54) **Engine exhaust emission purifier**

(57) A nitrogen oxides trapping catalytic converter (20) is provided downstream of a three-way catalytic converter (18) of an exhaust passage (31) of an engine (1). An engine control unit (21) operates the engine (1) at a stoichiometric air-fuel ratio until the three-way catalyst becomes active so as to provide a minute amount of oxygen contained in the burnt gas of the fuel mixture to the zeolite catalyst which traps NOx in the presence of oxygen. After the three-way catalyst is activated, the engine (1) is operated at a lean air-fuel ratio. Due to this air-fuel ratio control, oxygen supply to the zeolite catalyst is ensured regardless of the activation state of the three-way catalyst.

FIG. 1

EP 1 184 556 A2

## Description

FIELD OF THE INVENTION

This invention relates to purification of nitrogen oxides contained in the exhaust gas of an engine.

BACKGROUND OF THE INVENTION

With regard to purification of nitrogen oxides discharged from an engine operated under a lean air-fuel ratio, Tokkai Hei 7-166913 published by the Japanese Patent Office in 1995 discloses a catalyst wherein a precious metal such as platinum (Pt) and at least one component selected from an alkali metal such as potassium ($K$), sodium (Na), lithium (Li) or cesium (Cs), an alkaline earth comprising barium (Ba) or calcium (Ca) and a rare earth comprising lanthanum (La) or yttrium (Y), are supported on an alumina substrate.

In an active state, this catalyst traps NOx contained in combustion gas from an air-fuel mixture of a lean air-fuel ratio, reduces the trapped NOx by reducing agent components such as hydrocarbon (HC) or carbon monoxide (CO) contained in combustion gas of an air-fuel mixture of a stoichiometric air-fuel ratio or a rich air-fuel ratio, and releases it as non-toxic nitrogen (N2).

SUMMARY OF THE INVENTION

However, this NOx catalyst does not become active until the catalyst temperature reaches a high temperature, e.g. 200 °C, so it does not exhibit sufficient NOx trap capacity immediately after a cold start of the engine.

In this context, the inventors conducted experiments on nitrogen monoxide (NO) trap characteristics at low temperature of a catalyst formed of zeolite. In the experiments, it was found that the principal NOx component of the exhaust gas of an engine is nitrogen monoxide (NO) and that the NO trap rate of this catalyst depended on the oxygen concentration. Specifically, a high NO trap rate was achieved at a temperature lower than 200 °C in the presence of oxygen. The amount of oxygen needed herein was very small.

The inventors have also discovered that a catalyst consisting of noble metal and ceria (CeO$_2$) which supports noble metal has similar characteristics to the zeolite catalyst in view of NOx trapping ability in low temperature. Platinum (Pt), palladium (Pd), rhodium (Rh), ruthenium (Ru), iridium (Ir), osmium (Os) or the combination thereof may be used as the noble metal. This catalyst is processed into powder and coated on a substrate made of ceramic material. This type of catalyst and the aforesaid zeolite catalyst are hereinafter referred to as a low temperature NOx trapping catalyst.

It is therefore an object of this invention to realize an efficient NOx purification using the low temperature NOx trapping catalyst.

In order to achieve the above object, this invention provides an exhaust emission purifier for an engine, comprising a nitrogen oxides trapping catalytic converter which contains a low temperature nitrogen oxides trapping catalystt which traps nitrogen oxides in an exhaust gas of the engine in the presence of oxygen; and a device which supplies oxygen to the nitrogen oxides trapping catalytic converter.

The details as well as other features and advantages of this invention are set forth in the remainder of the specification and are shown in the accompanying drawings.

BRIEF DESCRIPTION OF THE DRAWINGS

FIG. 1 is a schematic diagram of an exhaust emission controller according to this invention.
FIG. 2 is a flowchart describing an air-fuel ratio control routine performed by a control unit according to this invention.
FIG. 3 is similar to FIG. 1, but showing a second embodiment of this invention.
FIG. 4 is similar to FIG. 2, but showing the second embodiment of this invention.
FIG. 5 is a flowchart describing a secondary air supply control routine performed by a control unit according to the second embodiment of this invention.

DESCRIPTION OF THE PREFERRED EMBODIMENTS

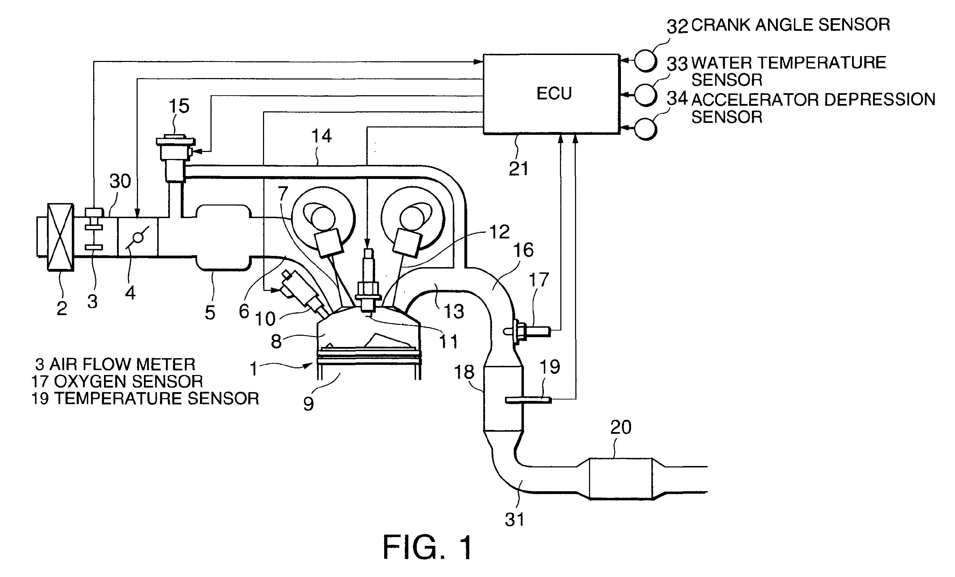

Referring to FIG. 1 of the drawings, intake air of a four-stroke multi-cylinder engine 1 for vehicles passes through an air cleaner 2 provided in an intake passage 30,and is led to an electronic throttle 4. The electronic throttle 4 adjusts an intake air amount according to its opening.

The intake air which passed through the electronic throttle 4 is divided in an inlet manifold 5 and supplied to respective cylinders 8 via an intake port 6 and an intake valve 7.

A piston 9 which performs a reciprocating motion is installed inside the cylinder 8. A fuel injector 10 injects fuel into the air in the cylinder 8, and produces an air-fuel mixture in the cylinder 8. A spark plug 11 ignites the air-fuel mixture, and burns it. Burnt gases from an exhaust gas valve 12 are discharged to an exhaust gas passage 31 via an exhaust port 13 and an exhaust manifold 16. An exhaust gas recirculation (EGR) passage 14 which recirculates part of the exhaust gas to the intake passage 30, is connected to the exhaust port 13. The exhaust gas recirculation flowrate of the EGR passage 14 is controlled by an EGR control valve 15 provided in the EGR passage 14.

An oxygen decreasing catalytic converter 18 comprising a three-way catalyst is provided in the exhaust passage 31. A nitrogen oxides trapping catalytic converter 20 containing a zeolite catalyst is provided downstream of the oxygen decreasing catalytic converter 18 in the exhaust gas passage 31.

The three-way catalyst in the catalytic converter 31 is a catalyst known in the art wherein alumina supporting at least one kind of noble metal, such as platinum (Pt), palladium (Pd) or rhodium (Rh), is coated on a substrate of honeycomb cross section. The three-way catalyst has a function to oxidize HC and CO in the exhaust gas and simultaneously reduce NOx when the air-fuel ratio of the air-fuel mixture which burns in the cylinder 8 is approximately equal to the stoichiometric air-fuel ratio. It also has a function to oxidize HC and CO when the air-fuel ratio of the air-fuel mixture is lean.

The zeolite catalyst built into the nitrogen oxides trapping catalytic converter 20 is a catalyst wherein zeolite, which traps NOx at low temperature, such as beta-zeolite, A type zeolite, Y type zeolite, X type zeolite, ZSM-5, USY, mordenite or ferrilite, is supported on a substrate of honeycomb cross section.

The nitrogen oxides trapping catalytic converter 20 may also comprise the catalyst consisting of noble metal and ceria ($CeO_2$) mentioned herebefore.

The opening of the electronic throttle 4, the fuel injection amount and timing of the fuel injector 10, the ignition timing of the spark plug 11, and the opening of the EGR control valve 15 are controlled by an engine control unit (ECU) 21. The ECU 21 comprises a microcomputer provided with a central processing unit (CPU), read-only memory (ROM), random access memory (RAM) and I/O interface.

To perform these controls, signals are input to the ECU 21 from an air flow meter 3 which detects an intake air amount $Qa$ of the engine 1, an oxygen sensor 17 which detects an oxygen concentration of exhaust gas upstream of the catalytic converter 31, a catalytic converter temperature sensor 19 which detects a temperature $Tc$ of the three-way catalyst of the catalytic converter 18, the crank angle sensor 32 which detects a crank angle and a rotation speed $Ne$ of the engine 1, a water temperature sensor 33 which detects a cooling water temperature $Tw$ of the engine 1 and an accelerator depression sensor 34 which detects a depression amount APO of an accelerator pedal of the vehicle. The oxygen sensor 17 is a sensor which determines whether the air-fuel ratio of the air-fuel mixture which burns in the cylinder 8 is rich or lean from the oxygen concentration of the exhaust gas.

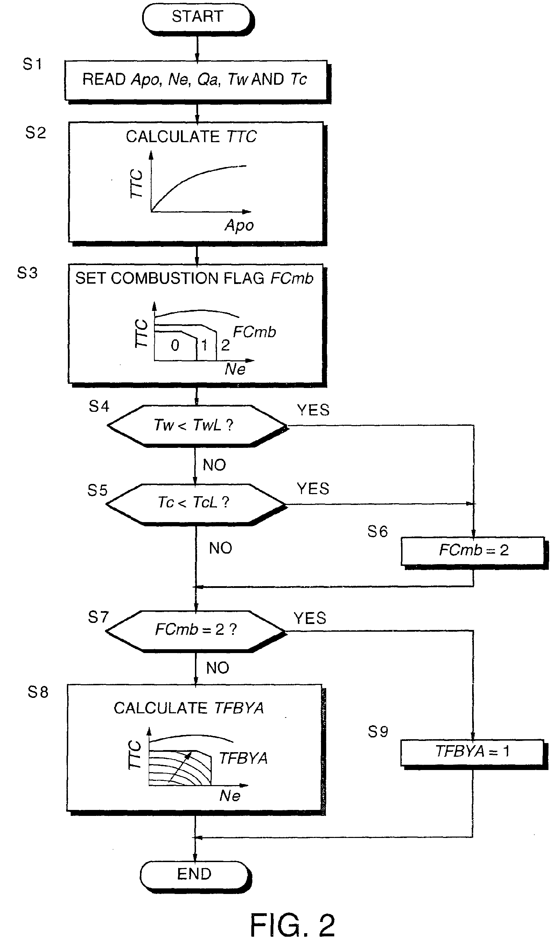

Next, the routine for controlling the air-fuel ratio of the air-fuel mixture performed by the ECU 21 will be described referring to Fig. 2. This routine is performed at an interval of ten milliseconds while the engine 1 is operating.

First, in a step S1, the accelerator pedal depression amount $Apo$, engine rotation speed $Ne$, intake air amount $Qa$, engine water temperature $Tw$, and catalytic converter temperature $Tc$ are read.

In a next step S2, a target torque $TTC$ of the engine 1 is calculated from the accelerator pedal depression amount $Apo$ referring to a map shown in the figure.

Next, in a step S3, the type of combustion of the engine 1 is determined from the engine rotation speed $Ne$ and the target torque $TTC$ referring to a map shown in the figure.

The type of combustion is represented by a combustion flag $FCmb$.

When the combustion flag $FCmb$ = 0, it denotes stratified lean combustion, when the combustion flag $FCmb$ = 1 it denotes homogeneous lean combustion, and when the combustion flag $FCmb$ = 2, it denotes homogeneous stoichiometric air-fuel ratio combustion.

In a next step S4, it is determined whether or not the cooling water temperature $Tw$ is lower than a predetermined value $TwL$. If lean operation is performed when the cooling water temperature $Tw$ is lower than the predetermined value $TwL$, combustion will be unstable. Hence, the routine resets the combustion flag $FCmb$ to 2 so as to prevent the engine 1 from being operated under a lean air-fuel ratio in a step S6, and the routine proceeds to a step S7.

On the other hand, when the cooling water temperature $Tw$ is not lower than the predetermined value $TwL$, the routine proceeds to a step S5.

Here, it is determined whether or not the temperature $Tc$ of the three-way catalyst is lower than a predetermined temperature $TcL$. When the temperature $Tc$ of the three-way catalyst is lower than the predetermined temperature $TcL$, the three-way catalyst is not active, so the combustion flag $FCmb$ is reset to 2 in the step S6, and the routine proceeds to the step S7. If the temperature $Tc$ of the three-way catalyst is not lower than the predetermined temperature $TcL$, the three-way catalyst has become active, so the routine proceeds to the step S7 without resetting the combustion flag $FCmb$.

In the step S7, it is determined whether or not the combustion flag $FCmb$ is 2, which requires homogeneous stoichiometric air-fuel ratio combustion. When the combustion flag $FCmb$ = 2, the routine proceeds to a step S9, the target equivalence ratio $TFBYA$ is set to 1, and the routine is terminated. When the combustion flag $FCmb$ is a value other than 2, a target equivalence ratio $TFBYA$ is calculated in a step S8 from the engine rotation speed $Ne$ and target torque $TTC$ by referring to a map shown in the figure. The maps used in this routine are previously stored in the ECU 21.

Here, the equivalence ratio is the inverse of an excess air factor lambda. When the equivalence ratio = 1, the air-fuel ratio is equal to the stoichiometric air-fuel ratio. At a lean air-fuel ratio, the equivalence ratio takes a value smaller than 1, and at a rich air-fuel ratio, the equivalence ratio takes a value larger than 1. The target equivalence ratio $TFBYA$ is the target value of the equivalence ratio.

The fuel injection amount for producing an air-fuel mixture of stoichiometric air-fuel ratio can be calculated from the intake air amount $Qa$ and engine rotation speed $Ne$ by the following equation.

$$\text{Basic injection quantity} = K \cdot \frac{Qa}{Ne}$$

where, $K$= constant.

The basic injection amount is multiplied by the target equivalence ratio $TFBYA$, and the fuel injection amount of the fuel injector 10 is determined by adding some other corrections. The ECU 21 outputs a pulse width modulation signal (PWM signal) corresponding to the determined injection amount to the fuel injector 10, and controls the air-fuel ratio of the air-fuel mixture in the cylinder 8. In the case of homogeneous combustion, the fuel injection of the fuel injector 10 is performed in the air intake stroke of the engine 1. Conversely, in stratified combustion, the fuel injection of the fuel injector 10 is performed in the compression stroke so as to form a rich air-fuel mixture around the spark plug 11.

Due to the routine of Fig. 2, before the three-way catalyst becomes active, the engine 1 is operated at the stoichiometric air-fuel ratio, and activation of the three-way catalyst is promoted. On the other hand, as the three-way catalyst which has not become active does not consume oxygen, a minute amount of oxygen contained in the burnt gas of the fuel mixture of the stoichiometric air-fuel ratio is supplied to the downstream nitrogen oxides trapping catalytic converter 20.

After the three-way catalyst in the oxygen decreasing catalytic converter 18 is activated, the engine 1 is operated under a lean air-fuel ratio. As a result, a large amount of oxygen is contained in the exhaust gas, and even if the three-way catalyst consumes oxygen, the oxygen which is still in excess is supplied to the nitrogen oxides trapping catalytic converter 20.

Due to the above air-fuel ratio control, regardless of whether or not the three-way catalyst is activated in the oxygen decreasing catalytic converter 18, the oxygen in the exhaust gas is supplied to the zeolite catalyst in the nitrogen oxides trapping catalytic converter 20. The zeolite catalyst traps NOx in the exhaust gas from low temperature due to the oxygen supplied in this way. Therefore, this exhaust emission controller can increase the NOx trap rate under low temperature conditions.

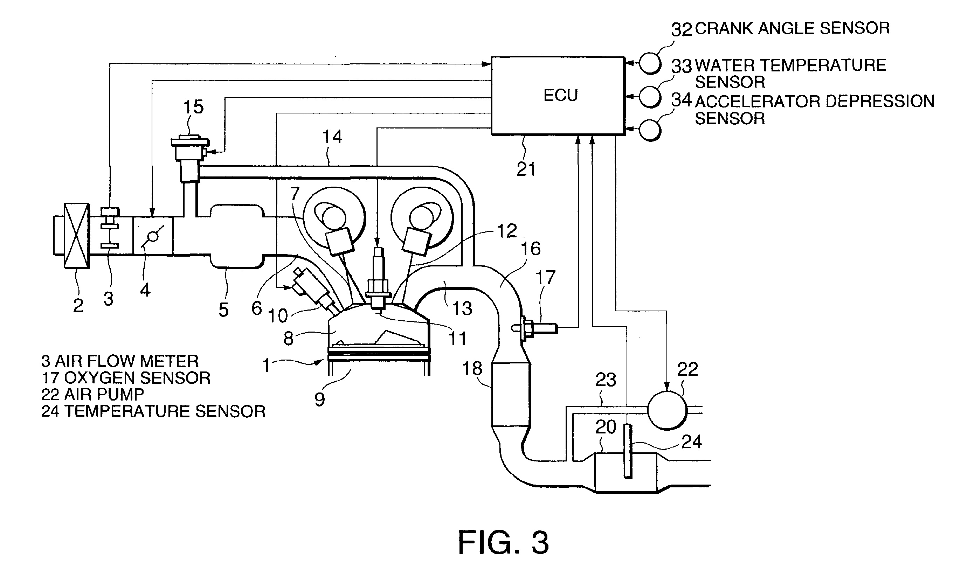

Next, a second embodiment of this invention will be described referring to FIGs. 3-5.

In the exhaust emission controller according to this embodiment, in addition to the composition of the first embodiment, an air pump 22 is provided for supplying oxygen to the nitrogen oxides trapping catalytic converter 20.

A secondary air introduction passage 23 connects the air pump 22 and the exhaust passage 31 between the oxygen decreasing catalytic converter 18 and the nitrogen oxides trapping catalytic converter 20. The operation of the air pump 22 is controlled by a signal from the ECU 21.

Moreover, a temperature sensor 24 is provided in the nitrogen oxides trapping catalytic converter 20 instead of providing the temperature sensor 19 in the oxygen decreasing catalytic converter 18. The temperature of the zeolite catalyst detected by the temperature sensor 24 is input into the ECU 21 as a signal.

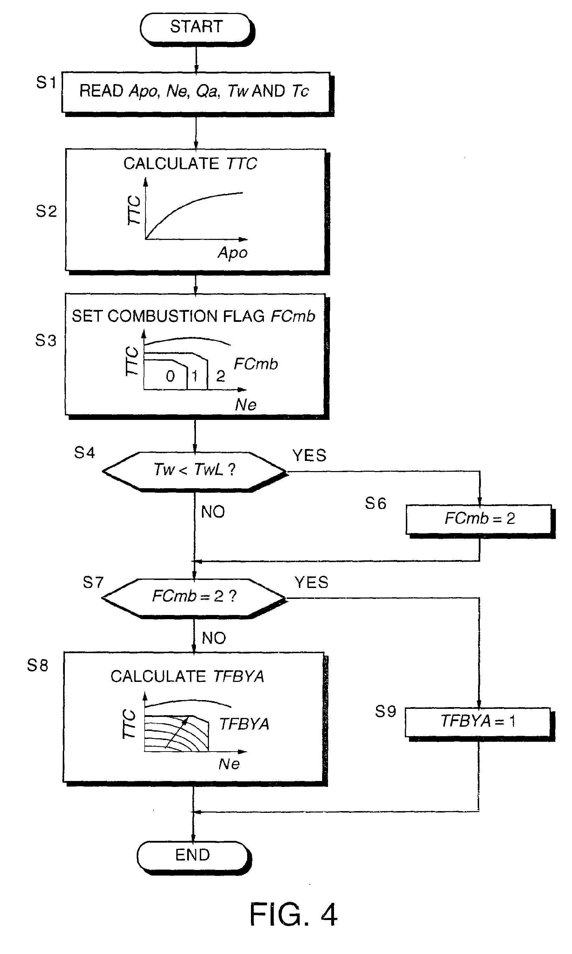

Next, the air-fuel ratio control routine performed by the ECU 21 will be described referring to the flowchart of Fig. 4. This routine is also performed at an interval of ten milliseconds during operation of the engine 1.

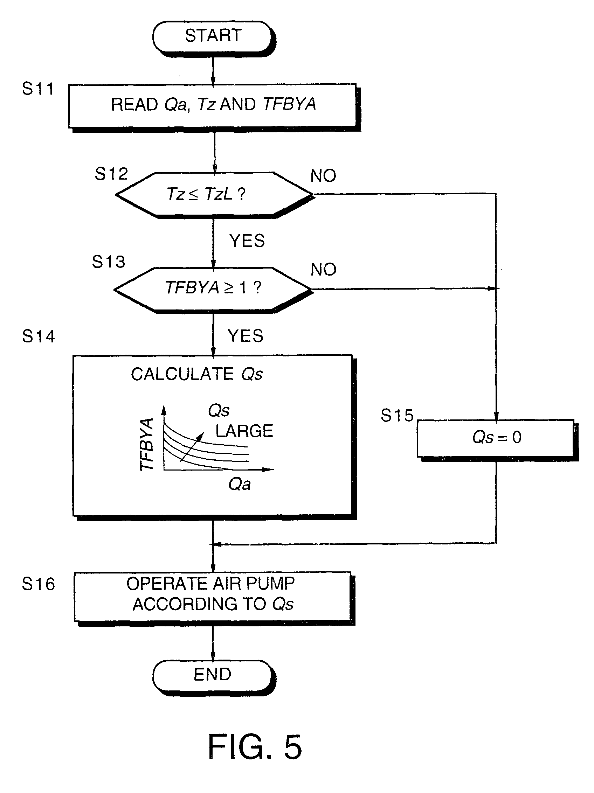

This routine is the same as the routine of FIG. 2 of the first embodiment omitting the step S5. In this routine, as a result of omitting the step S5, the type of combustion of the engine 1 is determined according to the running conditions of the engine 1 such as the engine rotation speed $Ne$, target torque $TCC$ and cooling water temperature $Tw$ regardless of whether the three-way catalyst has become active. On the other hand, the ECU 21 performs the secondary air supply control routine shown in FIG. 5 in parallel to the routine of Fig. 4. During lean combustion, secondary air is supplied to the nitrogen oxides trapping catalytic converter 20 by operating the air pump 22 by this routine. This routine is also performed at an interval of ten milliseconds during operation of the engine 1.

Referring to FIG. 5, first in a step S11, the ECU 21 reads the intake air amount $Qa$, a zeolite catalyst temperature $Tz$ and the target equivalent ratio $TFBYA$.

In a following Step S12, it is determined whether or not the zeolite catalyst temperature $Tz$ is higher than a predetermined temperature $TzL$. The predetermined temperature $TzL$ is a maximum temperature at which the zeolite catalyst has a high NOx trap rate in the presence of oxygen, and is set to, for example, 200 °C.

When it is determined that the zeolite catalyst temperature $Tz$ is higher than the predetermined temperature $TzL$ in a Step S12, it shows a temperature range where the zeolite catalyst does not trap NOx. In this case, the routine sets the secondary air target flowrate $Qs$ to zero in a step S15, and the proceeds to a step S16.

When it is determined that the zeolite catalyst temperature $Tz$ does not exceed the predetermined temperature $TzL$ in the step S12, the routine proceeds to the step S13 and determines whether or not the target equivalent ratio $TFBYA$ is smaller than 1. When the target equivalent ratio $TFBYA$ is smaller than 1 (i.e., when the engine 1 is operated under a lean air-fuel ratio), oxygen is contained in large quantity in the exhaust gas flowing into the nitrogen oxides trapping catalytic converter 20. In this case, supply of secondary air is unnecessary. Therefore, in the step S15, the secondary air target flowrate $Qs$ is set to zero, and the routine proceeds to the step S16.

On the other hand, when the target equivalent ratio $TFBYA$ is not smaller than 1, the engine 1 is operated under the stoichiometric air-fuel ratio or a rich air-fuel ratio.

In this case, the routine proceeds to the step S14, and the secondary air target flowrate $Qs$ is calculated from the intake air amount $Qa$ and the target equivalent ratio $TFBYA$ by looking up a map shown in the figure that was previously stored in the ECU 21.

This map is set so to give a larger secondary air target flowrate $Qs$ the larger the target equivalent ratio $TFBYA$ and the larger the intake air amount $Qa$.

In the step S16, the air pump 22 is operated according to the secondary air target flowrate $Qs$. However, when the secondary air target flowrate $Qs$ is zero, the air pump 22 is not operated.

According to this routine, when the temperature of the zeolite catalyst is in a range where a high NOx trap performance is obtained in the presence of oxygen and the engine 1 is not operated under a lean air-fuel ratio, secondary air is supplied to the nitrogen oxides trapping catalytic converter 20 according to the running state. Therefore, even if the engine 1 is operated under a rich air-fuel ratio, air will be present in the nitrogen oxides trapping catalytic converter 20 so that NOx can be trapped by the zeolite catalyst.

That is, in the temperature range suitable for the trapping of NOx by the zeolite catalyst, the zeolite catalyst always traps NOx and efficiently removes NOx from the exhaust gas regardless of the running state of the engine 1.

The zeolite catalyst exhibits a high NOx trap rate at 200 °C or less as mentioned above. Therefore, in all the above embodiments, it is desirable to install the nitrogen oxides trapping catalytic converter 20 in a position where the exhaust gas temperature during operation does not exceed 200 °C.

The contents of Tokugan 2000-267141 with a filing date of September 4, 2000 in Japan, are hereby incorporated by reference.

Although the invention has been described above by reference to certain embodiments of the invention, the invention is not limited to the embodiments described above. Modifications and variations of the embodiments described above will occur to those skilled in the art, in light of the above teachings.

For example, instead of disposing the three-way catalyst in the catalytic converter 18 upstream of the nitrogen oxides trapping catalytic converter 20, a lean NOx trap catalyst as in the above-mentioned prior art, a selective reduction NOx catalyst or an HC adsorption catalyst may be installed in the converter 18.

Plural converters may also be installed upstream of the nitrogen oxides trapping catalytic converter 20.

The embodiments of this invention in which an exclusive property or privilege is claimed are defined as follows:

**Claims**

1. An exhaust emission purifier for an engine (1), comprising:

   a nitrogen oxides trapping catalytic converter (20) which contains a low temperature nitrogen oxides trapping catalyst which traps nitrogen oxides in an exhaust gas of the engine (1) in the presence of oxygen; and
   a device (10, 21, 22) which supplies oxygen to the nitrogen oxides trapping catalytic converter (20).

2. The exhaust emission purifier as defined in Claim 1, wherein the purifier further comprises an oxygen decreasing catalytic converter (18) disposed between the engine (1) and the nitrogen oxides trapping catalytic converter (20) comprising an oxygen decreasing catalyst which, when activated, decreases oxygen in the exhaust gas.

3. The exhaust emission purifier as defined in Claim 1, wherein the oxygen decreasing catalyst comprises a three-way catalyst.

4. The exhaust emission purifier as defined in Claim 2 or Claim 3, wherein the oxygen supplying device (10, 21, 22) comprises an air-fuel ratio controller (10, 21) which controls an air-fuel ratio of an air-fuel mixture burnt by the engine (1).

5. The exhaust emission purifier as defined in Claim 4, wherein the purifier further comprises a sensor (19) which detects an activating state of the oxygen decreasing catalyst, the air-fuel ratio controller (10, 21) comprises a fuel injector (10) which injects fuel into the engine (1), and a microprocessor (21) programmed to control a fuel injection amount of the fuel injector (10) to make the air-fuel ratio equal to a stoichiometric air-fuel ratio when the oxygen decreasing catalyst is not active (S5, S6, S9), and control the fuel injection amount to make the air-fuel ratio leaner than the stoichiometric air-fuel ratio when the oxygen decreasing catalyst is active (S5, S8).

6. The exhaust emission purifier as defined in Claim 5, wherein the sensor (19) comprises a sensor (19) which detects a temperature of the oxygen decreasing catalyst, and the microprocessor (21) is further programmed to determine that the oxygen decreasing catalyst is active when the temperature of the oxygen decreasing catalyst is equal to or higher than a predetermined temperature (S5).

7. The exhaust emission purifier as defined in Claim 1, wherein the oxygen supplying device (10, 21, 22) comprises an air pump (22) which supplies air to the exhaust gas of the engine (1) from outside.

8. The exhaust emission purifier as defined in Claim 7, wherein the purifier further comprises a sensor (32, 33, 34) which detects a running condition of the engine (1) and an air-fuel ratio controller (10, 21) which controls an air-fuel ratio of an air-fuel mixture burnt by the engine (1) according to the running condition of the engine (1).

9. The exhaust emission purifier as defined in Claim 7 or Claim 8, wherein the purifier further comprises an oxygen decreasing catalytic converter (18) disposed between the engine (1) and the nitrogen oxides trapping catalytic converter (20) comprising an oxygen decreasing catalyst which, when activated, decreases oxygen in the exhaust gas, and the air pump (22) comprises a pump (22) which supplies air to an exhaust gas flowing into the nitrogen oxides trapping catalytic converter (20) from the oxygen decreasing catalytic converter (18).

10. The exhaust emission purifier as defined in any of Claim 1 through Claim 9, wherein the purifier further comprises a sensor (24) which detects a temperature of the zeolite catalyst, and a stop mechanism (21, S12, S15) which prevents the oxygen supplying device (10, 21, 22) from supplying oxygen to the nitrogen oxides trapping catalytic converter (20) when the temperature of the zeolite catalyst is higher than a predetermined temperature.

11. The exhaust emission purifier as defined in any of Claim 1 through Claim 10, wherein the low temperature nitrogen oxides trapping catalyst comprises any of beta-zeolite, A type zeolite, Y type zeolite, X type zeolite, ZSM-5, USY, mordenite and ferrilite.

12. The exhaust emission purifier as defined in any of Claim 1 through Claim 10, wherein the low temperature nitrogen oxides trapping catalyst comprises a nitrogen oxides trapping component consisting of noble metal and ceria which supports the noble metal, and coated on a substrate.

FIG. 1

32 CRANK ANGLE SENSOR

33 WATER TEMPERATURE
   SENSOR

34 ACCELERATOR DEPRESSION
   SENSOR

ECU

21

15

14

30

7

12

16

17

2

3

4

5

6

10

8

11

13

19

1

9

18

20

31

3 AIR FLOW METER
17 OXYGEN SENSOR
19 TEMPERATURE SENSOR

EP 1 184 556 A2

START

S1 — READ *Apo, Ne, Qa, Tw* AND *Tc*

S2 — CALCULATE *TTC*

S3 — SET COMBUSTION FLAG *FCmb*

S4 — *Tw < TwL* ? — YES

NO

S5 — *Tc < TcL* ? — YES

NO

S6 — *FCmb = 2*

S7 — *FCmb = 2* ? — YES

NO

S8 — CALCULATE *TFBYA*

S9 — *TFBYA = 1*

END

FIG. 2

FIG. 3

3 AIR FLOW METER
17 OXYGEN SENSOR
22 AIR PUMP
24 TEMPERATURE SENSOR

32 CRANK ANGLE SENSOR
33 WATER TEMPERATURE SENSOR
34 ACCELERATOR DEPRESSION SENSOR

ECU

EP 1 184 556 A2

EP 1 184 556 A2

START

S1 — READ *Apo*, *Ne*, *Qa*, *Tw* AND *Tc*

S2 — CALCULATE *TTC*

S3 — SET COMBUSTION FLAG *FCmb*

S4 — *Tw* < *TwL* ?

YES → S6 — *FCmb* = 2

NO

S7 — *FCmb* = 2 ?

YES → S9 — *TFBYA* = 1

NO

S8 — CALCULATE *TFBYA*

END

FIG. 4

10

START

S11 READ $Qa$, $Tz$ AND $TFBYA$

S12 $Tz \leq TzL$ ? — NO

YES

S13 $TFBYA \geq 1$ ? — NO

YES

S14 CALCULATE $Qs$

$Qs$ LARGE

$TFBYA$

$Qa$

S15 $Qs = 0$

S16 OPERATE AIR PUMP ACCORDING TO $Qs$

END

FIG. 5